# EUROPÄISCHE PATENTSCHRIFT

(11) **EP 3 729 626 B1**
(45) Veröffentlichungstag und Bekanntmachung des Hinweises auf die Patenterteilung: **04.09.2024**
(21) Anmeldenummer: 18822035.4
(22) Anmeldetag: 12.12.2018
(51) Int. Cl.: H02M 3/156, H02M 7/5387, H02J 7/00, H02J 3/32, H02J 3/38, H02J 7/35, H02M 7/797

(54) **UMRICHTER MIT MINDESTENS EINEM WANDLERMODUL MIT DREI BRÜCKENZWEIGEN, VERFAHREN ZUM BETREIBEN UND VERWENDUNG EINES SOLCHEN UMRICHTERS**
CONVERTER COMPRISING AT LEAST ONE CONVERTER MODULE WITH THREE BRIDGE BRANCHES, OPERATING METHOD, AND USE OF SUCH A CONVERTER
ONDULEUR AYANT AU MOINS UN MODULE CONVERTISSEUR À TROIS BRANCHES DE PONT, PROCÉDÉ DE FONCTIONNEMENT ET UTILISATION D'UN TEL CONVERTISSEUR

(30) Priorität: 21.12.2017 DE 102017131042
(43) Veröffentlichungstag der Anmeldung: 28.10.2020
(73) Patentinhaber: SMA Solar Technology AG, 34266 Niestetal (DE)
(72) Erfinder: FALK, Andreas, 34131 Kassel (DE)
(86) Internationale Anmeldenummer: PCT/EP2018/084596
(87) Internationale Veröffentlichungsnummer: WO 2019/121251

(56) Entgegenhaltungen:
- EP-A1- 2 112 758
- EP-A1- 3 258 588
- WO-A2-2006/089778
- US-A1- 2011 242 867
- US-A1- 2014 328 102
- RUXI WANG ET AL: "A High Power Density Single-Phase PWM Rectifier With Active Ripple Energy Storage", IEEE TRANSACTIONS ON POWER ELECTRONICS, vol. 26, no. 5, 1 May 2011 (2011-05-01), USA, pages 1430 - 1443, XP055565501, ISSN: 0885-8993, DOI: 10.1109/TPEL.2010.2090670

## Beschreibung

Die Erfindung betrifft einen Umrichter mit mindestens einem Wandlermodul mit einem ersten, einem zweiten und einem dritten Brückenzweig, wobei jeder der Brückenzweige jeweils einen Phasenausgang aufweist, und wobei ein gemeinsamer Gleichspannungszwischenkreis für alle Brückenzweige vorgesehen ist und eine Steuereinheit zur Ansteuerung der Brückenzweige. Die Erfindung betrifft weiterhin ein Verfahren zum Betreiben eines Umrichters sowie eine Verwendung eines solchen Umrichters.

Derartige Umrichter werden häufig als Wechselrichter eingesetzt, um Gleichspannung, z. B. aus einer Photovoltaik (PV-) Anlage, in einen netzkonformen Wechselstrom zur Einspeisung in ein dreiphasiges Wechselstromnetz umzuformen. Energieversorgungsnetze sind auf allen Spannungsebenen üblicherweise dreiphasig ausgelegt, wobei Einspeiserichtlinien der Netzanbieter bei der Einspeisung nur beschränkte Leistungsunterschiede für die drei Phasen zulassen. Aus diesem Grund sind - abgesehen von Umrichtern für spezielle Anwendungszwecke - Umrichter häufig mit drei Brückenzweigen ausgestattet, da dieses für die meisten Anwendungszwecke benötigt wird.

Aus der Druckschrift DE 10 2014 104 216 B3 ist ein dreiphasiger Wechselrichter bekannt, der beim Ausfall des Energieversorgungsnetzes in einem einphasigen Notbetrieb betreibbar ist. In diesem Notbetrieb werden zwei der drei Brückenzweige so betrieben, dass zwischen diesen beiden Brückenzweigen ein einphasiger Wechselstrom zur Notstromversorgung beispielsweise eines Wohnhauses auf zumindest einer Netzphase erfolgen kann. Der dritte Brückenzweig bleibt ungenutzt.

Die EP 2 950 439 A1 offenbart einen Power Router bestehend aus bidirektionalen Power Converter Untereinheiten gleichstromseitig verbunden über einen DC-Bus, wobei die Power Converter Untereinheiten verschiedene Lasten versorgen oder Leistung in Batterien oder Netze einspeisen. Jede der Untereinheiten muss hier für eine Leistung ausgelegt sein, die der jeweils angebundenen Quelle oder Last entspricht.

US 2014/0328102 A1 offenbart einen Inverter-Topologie, die den Rippel der doppelten Netzfrequenz reduzieren soll. Dazu wird eine zusätzliche Drossel zwischen einen Halbbrückenausgang und das Netz geschaltet.

US 2011/0242867 A1 offenbart einen "current source inverter", der niederfrequenten Rippel reduzieren und das Maximum -Power-Point-Tracking (MPPT) unterstützen soll.

EP 2 112 758 A1 offenbart einen AC/DC-Stromrichter, der eine Sekundärbatterie aus einer Wechselstromversorgung lädt, beispielsweise ein elektrisches Ladegerät zum Laden einer Sekundärbatterie für ein Elektroauto.

Das Dokument von RUXI WANG ET AL: "A High Power Density Single-Phase PWM Rectifier With Active Ripple Energy Storage", IEEE TRANSACTIONS ON POWER ELECTRONICS, Bd. 26, Nr. 5, Seiten 1430-1443, vom 1. Mai 2011 präsentiert Simulationen und experimentelle Resultate, um die erforderliche Energiespeicherkapazität für einphasige Gleichrichter effektiv zu reduzieren.

Bei einer Umwandlung von Gleichstrom in einen dreiphasigen Wechselstrom wird aus der Gleichstromquelle sehr gleichmäßig Energie entnommen, dadurch wird der DC-Zwischenkreis -der beispielsweise als Folienkondensator ausgeführt sein kann- nur wenig belastet. Hier muss nur die oft als "Rippel" bezeichnete, von den Schalthandlungen der Halbleiterschalter herrührende Schwankung auf der konstant entnommenen Gleichstromleistung gepuffert werden. Dieses gilt bei Umwandlung in einen Einphasenwechselstrom nicht, hier wird eine Leistung in sin²-Form entnommen, dementsprechend muss eine dazu gegenläufige/gegenphasige Leistung kompensiert werden, will man eine kontante Leistung aus der Gleichstromquelle entnehmen. Daher sind DC-Zwischenkreise von Wechselrichtern, die für dreiphasigen Wechselstrom dimensioniert sind, für eine einphasige Anwendung meist zu klein bemessen.

Aus Effizienzgründen ist es wünschenswert, Umrichter so auszugestalten und zu betreiben, dass eine Energieentnahme aus der angeschlossenen PV-Anlage über die gesamte Periode des erzeugten Wechselstroms möglichst gleichmäßig erfolgt. Gleichzeitig möchte man aber auch kostengünstige und möglichst immer gleichartig aufgebaute Umrichter verwenden. Speziell wäre es wünschenswert, günstig herzustellende "Standard-Dreiphasen-Wechselrichter" für Anwendungen zu ertüchtigen, die über die klassische Dreiphasen-Wechselstromeinspeisung in Verbundnetze hinausgehen. In diesem Zusammenhang vor allem die Anbindung von Speichersystemen zu nennen, da die Speicherung von elektrischer Energie im Zusammenspiel mit regenerativen Energiequellen aufgrund deren stark fluktuierenden Energieerzeugung immer mehr Bedeutung erhält.

Es ist daher eine Aufgabe der vorliegenden Erfindung, eine Vorrichtung umfassend einen Filter und einen Umrichter mit einem Wandlermodul mit drei Brückenzweigen zu schaffen, die bei gleichmäßiger Belastung einer DC-Stromquelle eine Wechselspannung und eine Gleichspannung für Speichersysteme bereitstellt. Es ist eine weitere Aufgabe, ein Betriebsverfahren für einen derartigen Umrichter als Teil der Vorrichtung anzugeben.

Diese Aufgabe wird durch eine Vorrichtung mit einem Umrichter und einem Filter, sowie ein Verfahren zum Betreiben einer Vorrichtung mit den Merkmalen des jeweiligen unabhängigen Anspruchs gelöst. Vorteilhafte Ausgestaltungen und Weiterbildungen sind Gegenstand der abhängigen Ansprüche.

Bei einem Umrichter der erfindungsgemäßen Vorrichtung aus Filter und Umrichter wird zwischen den Phasenausgängen des ersten und zweiten Brückenzweiges eine Wechselspannungsleistung bereitstellt, wohingegen an den dritten Brückenzweig ein Energiespeicher anschließbar ist, um diesen Energiespeicher zu laden und/oder entladen. An den Eingang des Umrichters kann eine Gleichstromquelle, beispielsweise ein PV-Generator, angeschlossen werden. Der Umrichter umfasst mindestens ein Wandlermodul mit einem ersten, zweiten und dritten Brückenzweig, wobei jeder der Brückenzweige jeweils einen Phasenausgang aufweist. Das Wandlermodul umfasst ferner einen gemeinsamen Gleichspannungszwischenkreis für die Brückenzweige. Der der erste und zweite Brückenzweig sind eingerichtet, eine erste Leistung der Gleichstromquelle zu entnehmen und als Wechselstrom an den Phasenausgängen bereitzustellen. An dem Phasenausgang des dritten Brückenzweiges kann ein Energiespeicher angeschlossen werden, dessen Ankopplung über den Filter erfolgt. Der Brückenzweig ist somit Teil eines DC-Zweigs des Umrichters, bei dem die Komponenten des Filters mit den Halbleiterschaltern des dritten Brückenzweigs als DC/DC-Wandler mit einer hoch- und/oder tiefsetzstellenden Funktion zusammenwirken. Der dritte Brückenzweig ist eingerichtet, eine zweite Leistung zwischen Gleichstromquelle und Energiespeicher und zwischen dem Energiespeicher und dem gemeinsamen Gleichspannungszwischenkreis auszutauschen. Der Energiespeicher kann der Gleichstromquelle, über den Gleichspannungszwischenkreis, elektrische Leistung entnehmen und speichern, umgekehrt kann elektrische Leistung aus dem Energiespeicher zurück in den Gleichspannungszwischenkreis fließen und weiter, über den ersten und zweiten Brückenzweig in ein beispielsweise dort angeschlossenes Netz.

Der Umrichter umfasst ferner eine Steuereinheit, die dazu eingerichtet ist, die Brückenzweige, beziehungsweise deren Halbleiterschalter, so anzusteuern, dass die Summe aus der ersten Leistung und der zweiten Leistung einem konstanten Sollwert entspricht, so dass ein Leistungsfluss in beziehungsweise aus dem gemeinsamen Gleichspannungszwischenkreis minimiert wird. Die Bilanzierung der Summe aus der ersten Leistung und der zweiten Leistung bezieht sich auf die momentanen Amplituden und Richtungen der Energieflüsse und findet im gemeinsamen Gleichspannungszwischenkreis statt, der durch diese praktisch unbelastet bleiben soll. Die Steuereinheit ist erfindungsgemäß dazu eingerichtet, die Brückenzweige so anzusteuern, dass die geometrische Summe der zweiten Leistung, die durch den dritten Brückenzweig fließt und der ersten Leistungen die durch die ersten und zweiten Brückenzweige fließt im gemeinsamen Gleichspannungszwischenkreis zu jeden Zeitpunkt einen konstanten Sollwert ergeben, der der Gleichstromquelle entnommen und als Wechselstrom an den Phasenausgängen ausgegeben wird. Insgesamt sollen kleine Schwankungen der Summe der Momentanwerte sich zumindest über die Dauer einer Netzperiode ausgleichen.

Dies bedeutet, dass ein Momentanwert einer in bzw. aus dem Energiespeicher fließenden Leistung die Wechselspannungsleistung auf einer Zeitskala, die sich auf die Netzfrequenz bezieht, ausgleicht.

Ein erfindungsgemäßes Verfahren betrifft eine Steuerung einer Vorrichtung mit einem Filter und einem Umrichter, an dessen Eingang eine Gleichstromquelle angeschlossen werden kann. Der Umrichter umfasst mindestens ein Wandlermodul mit einem ersten, zweiten und dritten Brückenzweig, wobei jeder der Brückenzweige jeweils einen Phasenausgang aufweist und einen gemeinsamen Gleichspannungszwischenkreis für die Brückenzweige, ferner umfasst der Umrichter eine Steuereinheit zur Ansteuerung der Brückenzweige, beziehungsweise deren Halbleiterschalter. An den dritten Brückenzweig kann ein Energiespeicher angeschlossen werden, dessen Ankopplung über einen Filter erfolgt. Der Brückenzweig ist somit Teil eines DC-Zweigs des Umrichters, bei dem die Komponenten des Filters mit den Halbleiterschaltern des dritten Brückenzweigs als DC/DC-Wandler mit einer hoch- und/oder tiefsetzstellenden Funktion zusammenwirken. Erfindungsgemäß wird der erste und zweite Brückenzweig so angesteuert, dass eine erste Leistung der Gleichstromquelle entnommen und als Wechselstrom an den Phasenausgängen bereitgestellt wird, anders ausgedrückt kann eine AC-Leistung in ein Netz eingespeist oder AC-Verbraucher mit elektrischer Leistung versorgt werden. Der dritte Brückenzweig wird so angesteuert, dass eine zweite Leistung zwischen Gleichstromquelle und Energiespeicher, sowie zwischen Energiespeicher und gemeinsamen Gleichspannungszwischenkreis ausgetauscht werden kann.

Die Ansteuerung der Brückenzweige ist dadurch gekennzeichnet, dass die Summe aus der ersten Leistung und der zweiten Leistung einem konstanten Sollwert entspricht, so dass ein Leistungsfluss in beziehungsweise aus dem gemeinsamen Gleichspannungszwischenkreis minimiert wird. Anders ausgedrückt wird der dritte Brückenzweig so angesteuert, dass ein Momentanwert der in den bzw. aus dem Energiespeicher fließenden Leistung die generierte Wechselspannungsleistung auf der einer Zeitskala, die sich auf die Netzfrequenz bezieht, ausgleicht. Bevorzugt verlaufen zu diesem Zweck die in bzw. aus dem Energiespeicher fließenden Leistung und die Wechselspannungsleistung gegenphasig.

Es wird auf diese Weise erreicht, dass die Wechselspannungsleistung im Verlauf einer jeden Netzfrequenzperiode durch die variierende Leistung, die in bzw. aus dem Energiespeicher fließt, so ausgeglichen wird, dass die Gleichstromquelle konstant belastet wird. Der Energiespeicher kann auf diese Weise zumindest teilweise die Funktion von Kondensatoren übernehmen, die bei Geräten nach dem Stand der Technik üblicherweise im Gleichspannungs- (DC-) Zwischenkreis angeordnet sind. Diese brauchen durch das erfindungsgemäße Verfahren die mit der doppelten Netzfrequenz auftretenden Leistungsschwankungen der Wechselstromleistung nicht aufzufangen, sondern nur die mit sehr viel höherer Frequenz auftretenden Stromrippel, die durch das Schalten der Halbleiterleistungsschalter hervorgerufen werden. Entsprechend kann eine Kapazität im DC-Zwischenkreis klein gehalten werden, insbesondere so klein, dass sie wirtschaftlich und im Hinblick auf den geringeren Platzbedarf durch Folienkondensatoren aufgebracht werden kann, die eine längere Lebensdauer und geringere Verluste aufweisen als beispielsweise Elektrolytkondensatoren.

In einer vorteilhaften Ausgestaltung entspricht der konstante Sollwert einem Maximum-Power-Point (MPP) der Gleichstromquelle, beispielsweise eines PV-Generators. Dies ist für die maximale Energieausbeute der Gleichstromquelle wichtig und führt zu einer optimierten Effizienz des Gesamtsystems aus Gleichstromquelle und Umrichter.

In einer weiteren vorteilhaften Ausgestaltung des Umrichters als Teil der erfindungsgemäßen Vorrichtung sind der erste, zweite und dritte Brückenzweig gleicher Bauart. Die bietet den Vorteil "Standard-Dreiphasen-Wechselrichter", die günstig und in großer Stückzahl hergestellt werden können, für Anwendungen im Zusammenspiel mit Energiespeichern, beispielsweise Batterien, zu nutzen was bislang nicht möglich war. Weiter sind die Brückenzweige bevorzugt für eine bidirektionale Betriebsweise ausgelegt, um ggf. auch einen Stromrückfluss von dem Energiespeicher in den DC-Zwischenkreis zu ermöglichen, was den zusätzlichen Vorteil bringt, den Energiespeicher an einen beliebigen Brückenzweig anschließen zu können. An den anderen Brückenzweigen wird damit auch die Bereitstellung von Blindstrom, beispielsweise zur Netzstützung, möglich.

In einer weiteren vorteilhaften Ausgestaltung umfasst der Umrichter als Teil der erfindungsgemäßen Vorrichtung genau ein Wandlermodul mit drei Brückenzweigen, wodurch ein einphasiger Wechselstrom an den Phasenausgängen von zweien der drei Brückenzweige, beispielsweise für eine direkte Versorgung von lokalen Lasten oder eine Einspeisung in ein Inselnetz oder übergeordnetes Verbundnetz, ermöglicht wird. Trotzdem kann diese Funktion mit einem "Standard-Dreiphasen-Wechselrichter" bereitgestellt werden, dessen DC-Zwischenkreis beispielsweise mit günstigen und raumsparenden Folienkondensatoren aufgebaut ist. Die im Vergleich zu herkömmlichen Wechselrichtern für einphasige Anwendungen fehlende Zwischenkreiskapazität wird erfindungsgemäß durch die Leistungsaufnahme und -abgabe in den Zwischenkreis aus der Speichereinheit über die Steuerung des dritten Brückenzweiges erreicht.

Vorteilhaft kann der Umrichter als Teil der erfindungsgemäßen Vorrichtung auch mindestens drei Wandlermodule mit je drei Brückenzweigen umfassen, wobei ausgangsseitig eine dreiphasige Wechselspannung bereitgestellt wird und jede Phase der dreiphasigen Wechselspannung von zwei Brückenzweigen unterschiedlicher Wandlermodule bereitgestellt wird, und wobei die dritten Brückenzweige mit einem Energiespeicher gekoppelt werden können. Dabei kann es sich um je einen Energiespeicher an jeweils einem der dritten Brückenzweige der drei Wandlermodule handeln, also insgesamt um drei Energiespeicher. Oder alle dritten Brückenzweige der drei Wandlermodule können mit einem gemeinsamen Energiespeicher verbunden werden.

Umrichter mit mindestens drei (baugleichen) Wandlermodulen mit je drei Brückenzweigen sind marktgebräuchlich, wobei die Wandlermodule meist parallel betrieben werden, um höhere Leistungen bereitzustellen zu können.

In einer vorteilhaften Ausgestaltung des Umrichters als Teil der Vorrichtung umfasst der Energiespeicher eine (wiederaufladbare) Batterie, auch Akkumulator genannt. Auch ein dem Phasenausgang des dritten Brückenzweigs bzw. den Phasenausgängen der dritten Brückenzweige kann einen Teil des Energiespeichers bilden.

Besonders vorteilhaft kann das beschriebene Verfahren bei einem Umrichter als Teil der erfindungsgemäßen Vorrichtung genutzt werden, der zur Einspeisung von Wechselstromleistung in ein einphasiges Energieversorgungsnetz für einen Schienenverkehr eingesetzt wird. Dieses gilt insbesondere, da im Schienenverkehr häufig niedrigere Netzfrequenzen verwendet werden, beispielsweise etwa 16 Hz (Hertz) anstelle von 50 oder 60 Hz in sonstigen Energieversorgungsnetzen. Je niedriger die Netzfrequenz ist, umso höhere Kapazitäten müssten für Umrichter gemäß dem Stand der Technik im DC-Zwischenkreis eingesetzt werden, wenn der PV-Generator möglichst gleichmäßig über den Verlauf einer Netzperiode belastet werden soll. Das erfindungsgemäße Verfahren macht eine Einspeisung auch von größerer Leistung in ein nur einphasiges Energieversorgungsnetz mit vertretbarem Bauteileaufwand für den DC-Zwischenkreis möglich, da beispielsweise die im "Standard-Dreiphasen-Wechselrichter" mit Folienkondensatoren fehlende Zwischenkreis-Kapazität durch die Batterie "emuliert" wird.

Die Erfindung wird nachfolgend anhand von Ausführungsbeispielen mit Hilfe von Figuren näher erläutert. Die Figuren zeigen:
- Fig. 1: eine schematische Darstellung einer Anordnung mit einem Umrichter in einem ersten Ausführungsbeispiel;
- Fig. 2: ein schematisches Diagramm zur Leistungsverteilung während einer halben Wechselstromperiode bei der Anordnung des ersten Ausführungsbeispiels;
- Fig. 3: eine schematische Darstellung einer Anordnung mit einem Umrichter in einem zweiten Ausführungsbeispiel; und
- Fig. 4: ein schematisches Diagramm zur Leistungsverteilung während einer halben Wechselstromperiode bei der Anordnung des zweiten Ausführungsbeispiels.

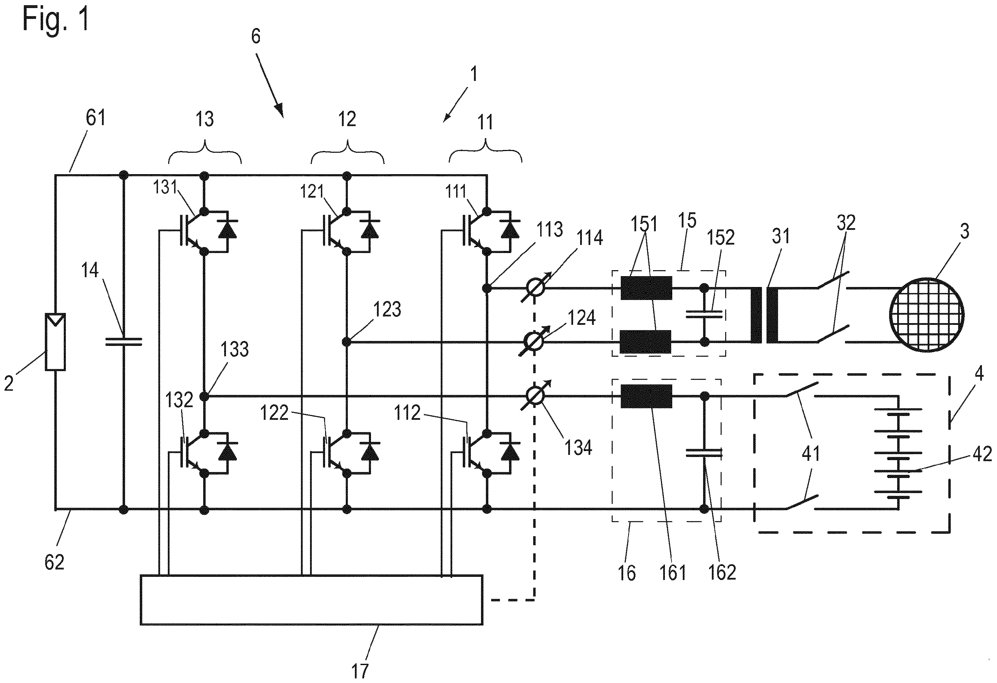

In Fig. 1 ist in einem schematischen Schaltbild eine Anordnung mit einem Umrichter 6 in einem ersten Ausführungsbeispiel wiedergegeben.

Der Umrichter 6 weist ein Wandlermodul 1 mit drei Brückenzweigen, einem ersten Brückenzweig 11, einem zweiten Brückenzweig 12 und einem dritten Brückenzweig 13 auf. Jeder dieser Brückenzweige 11-13 umfasst zwei in Reihe geschaltete Halbleiterschalter 111, 112 bzw. 121, 122 und 131, 132. An den Eingängen 61, 62 des Umrichters 6 wird eine DC-Eingangsspannung den Brückenzweige 11-13 zugeführt, die hier beispielhaft von einem Photovoltaik (PV-) Generator 2 bereitgestellt wird. Mittelabgriffe zwischen den jeweils zwei Halbleiterschaltern 111, 112 bzw. 121, 122 bzw. 131, 132 eines jeden Brückenzweigs 11-13 stellen bei der gezeigten Topologie Phasenausgänge 113, 123, 133 der Brückenzweige 11-13 dar.

Der PV-Generator 2 ist in Fig. 1 symbolisch durch das Schaltzeichen einer einzigen PV-Zelle wiedergegeben. Es versteht sich, dass der PV-Generator 2 eine Vielzahl von PV-Zellen, angeordnet in einer Mehrzahl von PV-Modulen umfassen kann, wobei die PV-Module ihrerseits in einer Reihen- und/oder Parallelschaltung verschaltet sein können, um den PV-Generator 2 zu bilden.

Parallel zum PV-Generator 2 ist als Teil des Wandlermodules 1 ein DC-Zwischenkreis 14 ausgebildet, der in der Fig. 1 durch das Schaltzeichen eines Kondensators symbolisiert ist.

Die einzelnen Halbleiterschalter 111, 112, 121, 122, 131, 132 werden von einer Steuereinheit 17 angesteuert, bevorzugt in einem Pulsweiten-Modulationsverfahren (PWM-Verfahren), um den zugeführten Gleichstrom zu wandeln. Im gezeigten Beispiel sind die Halbleiterschalter 111, 112, 121, 122, 131, 132 IGBTs (insulated gate bipolar transistors) mit antiparallel geschalteten Freilaufdioden. Die Ansteuerung der Halbleiterschalter 111, 112, 121, 122, 131, 132 ist in der Fig. 1 sehr schematisch gezeigt.

Zur korrekten Bestimmung der Schaltzeitpunkte des PWM-Verfahrens werden geeignete Strom- und/oder Spannungsmesswerte an den Brückenzweigen 11-13 und/oder Ausgängen des Umrichters 6 benötigt. Beispielhaft sind in der Fig. 1 Strommessmittel 114, 124 und 134 zur Messung eines Ausgangsstrom jedes Brückenzweigs 11-13 dargestellt. Dieses können z.B. Shunts sein oder auch Sensoren wie Hall-Sensoren, die einen Strom anhand eines gemessenen Magnetfelds ermitteln. Die gemessenen Stromwerte werden in der Steuereinheit 17 ausgewertet. Aus Gründen der Übersichtlichkeit ist bei der Fig. 1 darauf verzichtet worden, entsprechende Spannungsmessmittel zur Messung einer Ausgangsspannung an den Phasenausgängen 113, 123 bzw. 133 einzuzeichnen.

Bei dem beispielhaft dargestellten Umrichter 6 stellen die Mittelabgriffe die Phasenausgänge 113, 123, 133 des Umrichters 6 dar. Grundsätzlich können auch andere Topologien bei dem Umrichter 6 umgesetzt sein als die gezeigte sogenannte B6-Topologie mit drei Brückenzweigen mit je zwei Halbleiterschaltern und Mittelabgriff. So könnte auch ein Umrichter mit einer drei oder mehr-Level-Topologie wie "Neutral Point Clamped" (NPC), "Bipolar Switch Neutral Point Clamped"(BSNPC), "Active Neutral Point Clamped" (ANPC) oder "Flying Capacitor" (FLC) eingesetzt werden. Diese Topologien benötigen ggf. mehr Halbleiterschalter pro Brückenzweig als die B6-Topologie, bieten aber oft Vorteile bezüglich ihrer Effizienz.

Der Umrichter 6 ist mit seinen drei Brückenzweigen 11-13 grundsätzlich geeignet, den am Eingang zugeführten Gleichstrom in einen dreiphasigen Wechselstrom umzuwandeln. Da dieses ein häufig auftretender Einsatzzweck von Umrichtern ist, sind Umrichter mit drei Brückenzweigen marktgängig. In der Regel sind die drei Brückenzweige identisch aufgebaut und verfügen über jeweils gleiche Strom- und Spannungsbelastbarkeit.

Bei der in Fig. 1 dargestellten Anwendung werden nur zwei der Brückenzweige, hier der erste Brückenzweig 11 und der zweite Brückenzweig 12, in Art einer H-Brücke zum Umrichten des zugeführten Eingangsgleichstroms in einen einphasigen Wechselstrom eingesetzt. Zu diesem Zweck sind die Phasenausgänge 113, 123 der beiden Brückenzweige 11, 12 über einen Filter 15 an eine Phase eines Energieversorgungsnetzes 3 angekoppelt. Die beiden Brückenzweige 11, 12 können somit als Teil eines AC-Zweigs des Umrichters 6 angesehen werden.

Im vorliegenden Fall ist zur Ankopplung an das Energieversorgungsnetz 3 ein Transformator 31 vorgesehen. Beispielhaft sind zudem Schaltorgane 32 als Netztrenner vorhanden. Zusätzlich können hier nicht gezeigte Sicherheits- oder Messeinrichtungen zwischen dem Umrichter 6 und dem Energieversorgungsnetz 3 angeordnet sein.

Der Filter 15 umfasst zwei seriell in den Leitungen zwischen den Phasenausgängen 113, 123 und dem Energieversorgungsnetz 3 angeordnete Drosseln (Spulen) 151 sowie einen parallel zu einer Primärwicklung des Transformators 31 angeordneten Kondensator 152. Der Filter 15 wirkt als ein sogenannter Sinusfilter und dient der Glättung des erzeugten einphasigen Wechselstroms. Es versteht sich, dass andere Kombination aus Drosseln und Kondensatoren als Filter 15 eingesetzt werden könnten.

Der dritte Brückenzweig 13 ist vorliegend nicht zur Wechselrichtung vorgesehen, sondern an eine Gleichstromeinheit (DC-Einheit) 4 angebunden. Die Ankopplung erfolgt über einen Filter 16, der ebenfalls eine in Serie geschaltete Drossel (Spule) 161 und einen parallel zur DC-Einheit 4 geschalteten Kondensator 162 umfasst. Der Brückenzweig 13 kann somit als Teil eines DC-Zweigs des Umrichters 6 angesehen werden.

Die Komponenten des Filters 16 wirken in diesem Fall zusammen mit den Halbleiterschaltern 311, 312 des dritten Brückenzweigs 13 als DC/DC-Wandler mit einer hoch- und/oder tiefsetzstellenden Funktion.

Dabei sind die Bezeichnungen "DC-Einheit" und "DC/DC-Wandler" nicht dahingehend zu verstehen, dass Strom und Leistung nur in eine Richtung fließen. Ein anmeldungsgemäßer Umrichter bzw. ein anmeldungsgemäßes Verfahren zeichnen sich im Gegenteil gerade dadurch aus, dass ein Stromfluss in bzw. aus der DC-Einheit 4 in seiner Stromstärke und ggf. seiner Polarität auf einer Zeitskala variieren kann, die in der Größenordnung der Periodendauer der Wechselstromfrequenz im Energieversorgungsnetz 3 liegt.

Die DC-Einheit 4 umfasst vorliegend Schaltorgane 41 zum An- oder Abkoppeln einer Batterie 42. Die Batterie 42 ist eine wiederaufladbare Batterie, die hier beispielhaft durch einer Mehrzahl von hintereinander geschalteten Batteriezellen wiedergegeben ist. Durch eine geeignete Ansteuerung der Halbleiterschalter 311, 312 wird ein Stromfluss vom PV-Generator 2 bzw. vom DC-Zwischenkreis 14 in die Batterie 42 oder umgekehrt von der Batterie 42 in den DC-Zwischenkreis 14 erreicht.

Anmeldungsgemäß stellt die Batterie 42 einen Energiespeicher zur Stützung bzw. Entlastung des DC-Zwischenkreises 14 dar. Es wird angemerkt, dass auch die Komponenten des Filters 16 eine Energie speichernde Funktion innehaben und von daher neben der Batterie 42 einen Teil des Energiespeichers bilden.

Die Kopplung des Umrichters 6 an das Energieversorgungsnetz 3 wird nachfolgend auch als AC-Zweig bezeichnet und die Kopplung des Umrichters 6 an die DC-Einheit 4 und insbesondere den Energiespeicher als DC-Zweig.

Die in Fig. 1 dargestellte Anordnung ermöglicht ein Einspeisen von Wechselstrom, der von dem PV-Generator 2 geliefert wird, in das einphasige Energieversorgungsnetz 3.

Ein Anwendungsgebiet der Anordnung gemäß Fig. 1 ist eine Einspeisung des vom PV-Generator 2 erzeugten Stroms in ein einphasiges übergeordnetes Energieversorgungsnetz 3. Ein derartiges einphasiges übergeordnetes Energieversorgungsnetz 3 liegt beispielsweise bei der Speisung von Bahntrassen im Schienenverkehr vor, so dass die dargestellte Anordnung gemäß Fig. 1 zum Beispiel in Zusammenhang mit einer Freifeld-PV-Anlage entlang einer Bahntrasse eingesetzt werden kann.

Bei einem anmeldungsgemäßen Betriebsverfahren für einen Umrichter mit drei Brückenzweigen, beispielsweise den in Fig. 1 gezeigten Umrichter 6, wird die vom Umrichter über den DC-Zweig übertragene Leistung abhängig von der übertragenen Wechselstromleistung eingestellt. Es spiegelt sich so die im Verlauf einer Wechselstromperiode bei dem Wechselstrom momentan variierende Leistung auch in der übertragenen Leistung im DC-Zweig wider. Die Wechselstromleistung variiert innerhalb einer Periode des Wechselstroms zweimal zwischen einem Minimalwert und einem Maximalwert. Entsprechend variiert auch die im DC-Zweig übertragene Leistung mit der doppelten Frequenz des Wechselstroms, allerdings entsprechend gegenphasig.

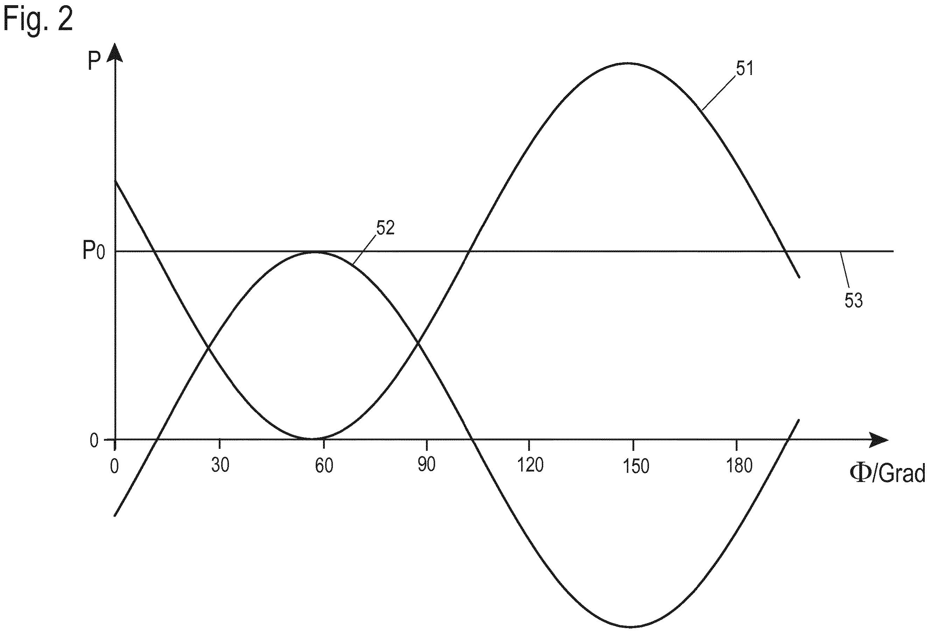

In Fig. 2 ist dieses schematisch in einem Diagramm dargestellt, bei dem der Verlauf von Leistung P, die im AC- bzw. DC-Zweig eines Umrichters übertragen wird, in Abhängigkeit eines Phasenwinkels Φ des abgegebenen Wechselstroms dargestellt. Die Leistung P ist auf der vertikalen und der Phasenwinkel Φ auf der horizontalen Achse des Diagramms angegeben. Beispielhaft wird die Fig. 2 nachfolgend mit Verweis auf den Aufbau des Umrichters 6 gemäß Fig. 1 erläutert.

In das Diagramm sind drei Kurvenverläufe eingezeichnet, nämlich eine im Verlauf der dargestellten halben Periode des Wechselstroms in dem AC-Zweig übertragene momentane erste Leistung 51, im folgenden auch AC-Leistung 51 genannt (entspricht der Leistung von einer Phase eines Drehstromnetzes), eine zweite Leistung 52, die momentan in (bei positivem Wert) bzw. aus (bei negativem Wert) der Batterie 42 in dem DC-Zweig übertragen wird. Diese in dem DC-Zweig übertragene Leistung 52 wird nachfolgend auch als Speicher-Leistung 52 bezeichnet. Weiter ist eine dritte Leistung 53 dargestellt, die der aus dem PV-Generator 2 entnommenen mittleren Leistung 53 entspricht. Die dargestellten Kurvenverläufe geben die übertragene Leistung wieder. Bei Vernachlässigung etwaiger Verluste im Umrichter 6 geben die Kurvenverläufe in gleicher Weise auch die von dem jeweiligen AC- oder DC-Zweig aufgenommene und dem DC-Zwischenkreis 14 entnommene Leistung wieder.

Die AC-Leistung 51 zeigt einen typischen sinusquadratförmigen Verlauf. Anwendungsgemäß werden die Schaltorgange 131, 132 des dritten Brückenzweigs 13, der Teil des DC/DC-Wandlers ist, so angesteuert, dass die übertragene Speicher-Leistung 52 gegenphasig zur übertragenen AC-Leistung 51 verläuft, so dass die insgesamt übertragene und damit auch die von dem PV-Generator 2 gelieferte Leistung 53 konstant ist.

Der DC-Zwischenkreis 14 wird somit über eine Periode der abgegebenen Wechselspannung gleichmäßig belastet, wodurch Spannungseinbrüche vermieden werden und der PV-Generator immer im MPP (Maximum Power Point) betrieben wird. Dieses wird erreicht, indem die in Batterie 42 eingespeiste bzw. aus der Batterie 42 entnommene Leistung während der dargestellten halben Periodendauer des erzeugten Wechselstroms so variiert, dass die Summe der AC-Leistung 51 und der Speicher-Leistung 52 konstant ist.

Dabei kann zeitweise - im dargestellten Beispiel im Bereich zwischen 105° und 195° des Phasenwinkels Φ der Batterie 42 auch Leistung entnommen werden, die dann in den AC-Zweig fließt. Energie wird entsprechend aus der Batterie 42 in den DC-Zwischenkreis 14 zurück übertragen. In diesem Fall stützt der DC-Zweig des Umrichters 6 den DC-Zwischenkreis 14.

Diese Vorgehensweise ist insbesondere bei einer Verwendung des Umrichters 5 gemäß Fig. 1 zur Einspeisung in ein Energieversorgungsnetz 3 der Bahn sinnvoll, da dieses häufig mit einer geringen Frequenz, z.B. von 16,6 Hz, betrieben wird und somit der DC-Zwischenkreis 14 eines Umrichters, der eigentlich für eine dreiphasen-Umwandlung bei einer höheren Frequenz von 50 oder 60 Hz dimensioniert ist, häufig keine ausreichende Kapazität aufweist. Ein geeignet dimensionierter Kondensator im DC-Zwischenkreis 14 wäre sehr großvolumig und kostenintensiv. Durch das anmeldungsgemäße Verfahren kann die Kapazität im DC-Zwischenkreis 14 so klein gehalten werden, dass sie wirtschaftlich und im Hinblick auf den Platzbedarf durch Folienkondensatoren aufgebracht werden kann, die eine längere Lebensdauer und geringere Verluste aufweisen als beispielsweise Elektrolytkondensatoren.

In Fig. 2 ist ein Fall dargestellt, bei dem die übertragene AC-Leistung reine Wirkleistung ist. Es ist jedoch auch möglich, durch den Umrichter neben einer Wirkleistung auch eine Blindleistung mit einem Energieversorgungsnetz auszutauschen. Die Phasenlage des vom DC/DC-Wandler übertragenen Gleichstroms orientiert sich in dem Fall an der Phasenlage des Gesamtstroms, der im AC-Zweig übertragen wird.

In einer Weiterbildung des Umrichters kann dieser mehrere Wandlermodule mit jeweils drei Brückenzweigen umfassen. Es können dann jeweils zwei Brückenzweige eines jeden Wandlermoduls im AC-Zweig und eines im DC-Zweig eingesetzt werden. Der AC-Zweig kann Wechselstrom auf insgesamt einer oder auch mehreren, z.B. drei Wechselspannungsphasen bereitstellen, wobei die zwei einer Phase zugeordneten Brückenzweige nicht notwendigerweise einem Wandlermodul zugeordnet sein müssen.

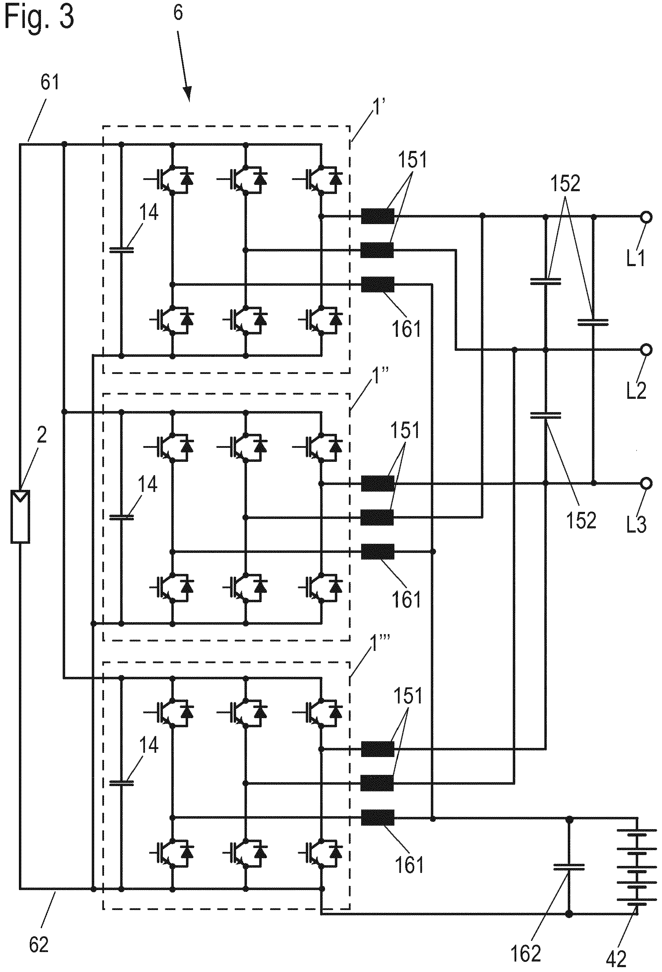

Fig. 3 zeigt einen derartigen Umrichter 6 umfassend drei 3-phasigen Wandlermodule 1', 1" und 1‴, die eingangsseitig mit einem gemeinsamen PV-Generator 2 verbunden sind. Anordnungen von drei (baugleichen) 3-phasigen Wandlermodulen sind bei Umrichtern marktgebräuchlich, um höhere Leistungen bereitzustellen zu können und auf bereits entwickelte Geräte zurückgreifen zu können. Bei dem Beispiel der Fig. 3 kennzeichnen gleiche Bezugszeichen gleiche oder gleichwirkende Elemente wie in Fig. 1. Der Übersichtlichkeit halber sind nicht alle Elemente in Fig. 3 mit einem Bezugszeichen versehen. Auch wurde auf die Darstellung einiger Elemente wie z.B. einer Steuereinheit (vgl. Bezugszeichen 17 der Fig. 1) verzichtet. Die Steuereinheit kann aus drei miteinander kommunizierenden Steuereinheiten, ganz ähnliche wie in Figur 1 für einen Umrichter mit einem Wandlermodul gezeigt, bestehen oder eine gemeinsame Steuereinheit für alle Wandlermodule kann die Steuersignale für alle enthaltenen Halbleiterschalter bereitstellen.

Die einzelnen Wandlermodule 1', 1", 1‴ sind analog zu dem Wandlermodul 1 der Fig. 1 mit jeweils drei Brückenzweigen aufgebaut. Drei Brückenzweige - jeweils einer eines jeden der Wandlermodule 1', 1", 1‴ - sind über Drosseln 161 auf einen gemeinsamen Kondensator 162 geschaltet und mit einer Batterie 42 gekoppelt. Die jeweils anderen zwei Brückenzweige der Wandlermodule 1', 1", 1‴ sind über Drosseln 151 und Kondensatoren 152 mit drei Phasenausgängen L1, L2 und L3 verbunden, an denen ein dreiphasiger Wechselstrom zur Einspeisung in ein dreiphasiges Energieversorgungsnetz bereitgestellt wird. Anders als im Ausführungsbeispiel der Figur 1 ist hier jedoch eine andere Anbindung der Brückenzweige an die Phasen L1, L2 und L3 gewählt, die mit "überkreuz" beschrieben werden kann. Jeweils zwei Brückenzweige unterschiedlicher Wandlermodule speisen in eine Phase ein. So generieren in Figur 3 beispielsweise ein Brückenzweig von Wandlermodul 1' und ein Brückenzweig von Wandlermodul 1" den Wechselstrom für Phase L1. Hierdurch reduziert sich der Ausgleichsbedarf zwischen der ausgegebenen AC-Leistung und der durch den DC-Zweig bereitzustellenden Leistung weiter.

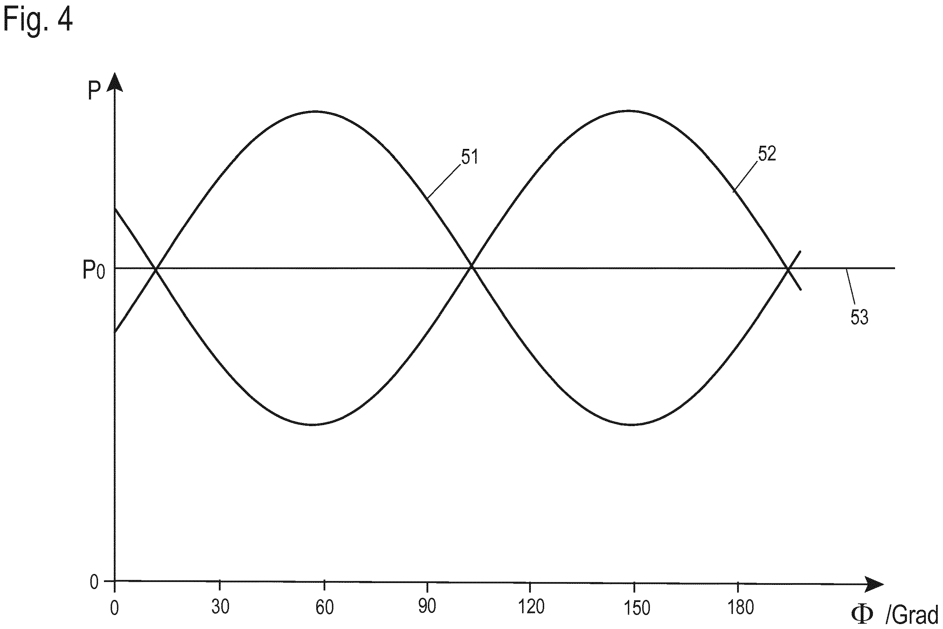

Fig. 4 zeigt einen erfindungsgemäßen Betrieb der Anordnung der Fig. 3 in einem Diagramm analog zu Fig. 2. Wiederum zeigt eine der dargestellten Kurven die in das Energieversorgungsnetz eingespeiste AC-Leistung 51, eine Kurve die in die Batterie 42 fließende Speicher-Leistung 52 und eine Kurve die dem PV-Generator entnommene PV-Leistung 53. Die AC-Leistung 52 ist bei reinem Drehstrombetrieb eine Gleichleistung, die von einer sinusförmigen Leistungskomponente mit halber Amplitude der Gleichleistung und doppelter Netzfrequenz überlagert ist.

Erfindungsgemäß werden die Brückenzweige, die mit der Batterie 42 verbunden sind, nun so geregelt, dass die Speicher-Leistung 52 gegenphasig zu der AC-Leistung verläuft, wodurch die dem PV-Generator 2 entnommene PV-Leistung 53 konstant ist. Ähnlich wie dem ersten Ausführungsbeispiel wird vorteilhaft eine möglichst gleichmäßige Leistungsabgabe des PV-Generators in jeder Netzperiode, d.h. auf einer Zeitskala der Netzperiode, erreicht.

Der Strom in die Batterie 42 ist ein Gleichstrom, da die Einzelströme der drei dritten Brückenzweige in Bezug auf ihren sinusförmigen Anteil um jeweils 60 Grad versetzt geregelt werden (bezogen auf die Netzgrundfrequenz).

### Bezugszeichen

- 1, 1'-1‴: Wandlermodul
- 11: erster Brückenzweig
- 111, 112: Halbleiterschalter
- 113: Phasenausgang
- 114: Strommessmittel
- 12: zweiter Brückenzweig
- 121, 122: Halbleiterschalter
- 123: Phasenausgang
- 124: Strommessmittel
- 13: dritter Brückenzweig
- 131, 132: Halbleiterschalter
- 133: Phasenausgang
- 134: Strommessmittel
- 14: DC-Zwischenkreis
- 15: Filter
- 151, 161: Drossel
- 152, 162: Kondensator
- 16: Filter
- 17: Steuereinheit

- 2: PV-Generator

- 3: Energieversorgungsnetz
- 31: Transformator
- 32: Schaltorgan

- 4: DC-Einheit
- 41: Schaltorgan
- 42: Batterie

- 51: erste Leistung
- 52: zweite Leistung
- 53: Sollwert

- 6: Umrichter
- 61, 62: Eingang

## Patentansprüche

1. Vorrichtung mit einem Umrichter (6) und einem Filter (16), wobei der Umrichter (6) einen Eingang (61, 62), verbindbar mit einer Gleichstromquelle (2), und mindestens ein Wandlermodul (1, 1'-1‴) mit einem ersten, zweiten und dritten Brückenzweig (11, 12, 13) und einem gemeinsamen Gleichspannungszwischenkreis (14) für die Brückenzweige (11, 12, 13) umfasst, wobei jeder der Brückenzweige (11, 12, 13) jeweils einen Phasenausgang (113, 123, 133) aufweist, , wobei
der erste und zweite Brückenzweig (11, 12) eingerichtet sind, eine erste Leistung (51) in Form von Wechselstrom an den Phasenausgängen (113, 123) bereitzustellen,
**dadurch gekennzeichnet, dass**
an den Phasenausgang (133) des dritten Brückenzweiges (13) ein Energiespeicher (42) anschließbar ist, wobei zwischen dem Energiespeicher (42) und dem Phasenausgang (133) der Filter (16) geschaltet ist, und wobei Komponenten des Filters (16) mit den Halbleiterschaltern (311, 312) des dritten Brückenzweigs (13) als DC/DC-Wandler mit einer hoch- und/oder tiefsetzstellenden Funktion zusammenwirken, und wobei der dritte Brückenzweig (13) eingerichtet ist, eine zweite Leistung (52) zwischen Gleichstromquelle (2) und Energiespeicher (42) und zwischen Energiespeicher (42) und Gleichspannungszwischenkreis (14) auszutauschen, und wobei
der Umrichter (6) eine Steuereinheit (17) umfasst, die dazu eingerichtet ist, die Brückenzweige (11, 12, 13) so anzusteuern, dass die Summe aus der ersten Leistung (51) und der zweiten Leistung (52) einem konstanten Sollwert (53) entspricht.

2. Vorrichtung nach Anspruch 1, wobei der konstante Sollwert (53) einem Maximum-Power-Point (MPP) der Gleichstromquelle (2) entspricht.

3. Vorrichtung nach Anspruch 1 oder 2, wobei der erste, zweite und dritte Brückenzweig (11, 12, 13) gleicher Bauart sind.

4. Vorrichtung nach einem der Ansprüche 1 bis 3, wobei der erste, zweite und dritte Brückenzweig (11, 12,13) für eine bidirektionale Betriebsweise ausgelegt sind.

5. Vorrichtung nach einem der Ansprüche 1 bis 4, wobei der Umrichter (6) genau ein Wandlermodul (1) mit drei Brückenzweigen (11, 12, 13) aufweist.

6. Vorrichtung nach einem der Ansprüche 1 bis 4, dessen Umrichter (6) mindestens drei Wandlermodule (1, 1'-1‴) umfasst, wobei ausgangsseitig eine dreiphasige Wechselspannung bereitgestellt wird und jede Phase der dreiphasigen Wechselspannung von zwei Brückenzweigen (11, 12) unterschiedlicher Wandlermodule (1, 1'-1‴) bereitgestellt wird, wobei die dritten Brückenzweige (13) mit einem Energiespeicher (42) gekoppelt sind.

7. Vorrichtung nach einem der Ansprüche 1 bis 6, bei dem der Gleichspannungszwischenkreis (14) Folienkondensatoren aufweist.

8. Vorrichtung nach einem der Ansprüche 1 bis 7, bei dem die Brückenzweige (11, 12, 13) aus Neutral Point Clamped (NPC) -, Bipolar Switch Neutral Point Clamped (BSNPC) -, Active Neutral Point Clamped (ANPC)- oder Flying Capacitor (FLC) -Zweigen bestehen.

9. Verfahren zum Betreiben einer Vorrichtung mit einem Filter (16) und einem Umrichter (6), umfassend einen Eingang (3, 4), verbindbar mit einer Gleichstromquelle (2), und mindestens ein Wandlermodul (1, 1'-1‴) mit einem ersten, zweiten und dritten Brückenzweig (11, 12, 13) und einem gemeinsamen Gleichspannungszwischenkreis (14) für die Brückenzweige (11, 12, 13), wobei jeder der Brückenzweige (11, 12, 13) jeweils einen Phasenausgang (113, 123, 133) aufweist, , wobei dem dritten Brückenzweig (13) ein Energiespeicher (42) nachgeschaltet ist, wobei der Umrichter (6) ferner eine Steuereinheit (17) zur Ansteuerung der Brückenzweige (11, 12, 13) umfasst, und wobei der erste und zweite Brückenzweig (11, 12) so angesteuert werden, dass eine erste Leistung (51) in Form von Wechselstrom an den Phasenausgängen (113, 123) bereitgestellt wird,
**dadurch gekennzeichnet, dass**
zwischen dem Energiespeicher (42) und dem Phasenausgang (133) der Filter (16) geschaltet ist, wobei Komponenten des Filters (16) mit den Halbleiterschaltern (311, 312) des dritten Brückenzweigs (13) als DC/DC-Wandler mit einer hoch- und/oder tiefsetzstellenden Funktion zusammenwirken, wobei der dritte Brückenzweig (13) so angesteuert wird, dass eine zweite Leistung (52) zwischen Gleichstromquelle (2) und Energiespeicher (42) und zwischen Energiespeicher (42) und Gleichspannungszwischenkreis (14) ausgetauscht wird, wobei
die Summe aus der ersten Leistung (51) und der zweiten Leistung (52) einem konstanten Sollwert (53) entspricht.

10. Verfahren nach Anspruch 9, wobei der konstante Sollwert (53) einem Maximum-Power-Point (MPP) der Gleichstromquelle (2) entspricht.

11. Verfahren nach Anspruch 9 oder 10, bei dem die in bzw. aus dem Energiespeicher (42) fließende zweite Leistung (52) und die als Wechselspannungsleistung ausgegebene erste Leistung (51) bezüglich der Leistungsentnahme aus der Gleichstromquelle (2) gegenphasig verlaufen.

12. Verfahren nach einen der Ansprüche 9 bis 11, bei dem die erste Leistung (51) in ein einphasiges Energieversorgungsnetz für einen Schienenverkehr eingespeist wird.

13. Vennrendung einer Vorrichtung mit einem Umrichter (6) und einem Filter (16) gemäß einem der Ansprüche 1 bis 5 zur Einspeisung von Wechselstromleistung in ein einphasiges Energieversorgungsnetz für einen Schienenverkehr.

## Claims

1. Device with a converter (6) and a filter (16), wherein the converter (6) comprises an input (61, 62) that is connectable to a DC source (2), and at least one transducer module (1, 1'-1‴) with a first, a second and a third bridge arm (11, 12, 13) and a common DC link circuit (14) for the bridge arms (11, 12, 13), wherein each of the bridge arms (11, 12, 13) respectively has a phase output (113, 123, 133), wherein the first and second bridge arms (11, 12) are configured to provide a first power (51) in form of alternating current at the phase outputs (113, 123), **characterised in that**
an energy store (42) is connectable to the phase output (133) of the third bridge arm (13), wherein the filter (16) is connected between the energy store (42) and the phase output (133), and wherein components of the filter (16) are acting together with the semiconductor switches (311, 312) of the third bridge arm (13) as DC/DC converter with a step-up and/or step-down function, and wherein the third bridge arm (13) is configured to exchange a second power (52) between the DC source (2) and the energy store (42) and between the energy store (42) and the DC link circuit (14), and wherein
the converter (6) comprises a control unit (17) which is configured to control the bridge arms (11, 12, 13) in such a manner that the sum of the first power (51) and the second power (52) corresponds to a constant set point (53).

2. Device as claimed in claim 1, wherein the constant set point (53) corresponds to a maximum power point (MPP) of the DC source (2).

3. Device as claimed in claim 1 or 2, wherein the first, second and third bridge arms (11, 12, 13) are of the same design.

4. Device as claimed in one of claims 1 to 3, wherein the first, second and third bridge arms (11, 12, 13) are designed for a bidirectional method of operation.

5. Device as claimed in one of claims 1 to 4, comprising precisely one transducer module (1) with three bridge arms (11, 12, 13).

6. Device as claimed in one of claims 1 to 4, the converter (6) thereof comprising at least three transducer modules (1, 1'-1‴), wherein a three-phase AC voltage is provided on the output side and each phase of the three-phase AC voltage is provided by two bridge arms (11, 12) of a different one of the transducer modules (1, 1'-1‴), wherein the third bridge arms (13) are coupled to an energy store (42).

7. Device as claimed in one of claims 1 to 6, in which the DC link circuit (14) comprises film capacitors.

8. Device as claimed in one of claims 1 to 7, in which the bridge arms (11, 12, 13) consist of neutral point clamped (NPC), bipolar switch neutral point clamped (BSNPC), active neutral point clamped (ANPC) or flying capacitor (FLC) arms.

9. A method for operating a device with a filter (16) and a converter (6), the device comprising an input (3, 4) connectable to a DC source (2), and at least one transducer module (1, 1'-1‴) with a first, a second and a third bridge arm (11, 12, 13) and a common DC link (14) for the bridge arms (11, 12, 13),
wherein each of the bridge arms (11, 12, 13) respectively comprises a phase output (113, 123, 133), wherein an energy store (42) is connected downstream of the third bridge arm (13), wherein the converter (6) further comprises a control unit (17) for controlling the bridge arms (11, 12, 13), and wherein
the first and second bridge arms (11, 12) are controlled in such a manner that a first power (51) is provided in form of alternating current at the phase outputs (113, 123),
**characterised in that**
the filter (16) is connected between the energy store (42) and the phase output (133), wherein components of the filter (16) are acting together with the semiconductor switches (311, 312) of the third bridge path (13) as DC/DC converter with a step-up and/or step-down function, wherein
the third bridge arm (13) is controlled in such a manner that a second power (52) is exchanged between the DC source (2) and the energy store (42) and between the energy store (42) and the DC link circuit (14),
wherein the sum of the first power (51) and the second power (52) corresponds to a constant set point (53).

10. The method as claimed in claim 9, wherein the constant set point (53) corresponds to a maximum power point (MPP) of the DC source (2).

11. The method as claimed in claim 9 or 10, in which the second power (52) flowing into or out of the energy store (42) and the first power (51) output as AC voltage power run in phase opposition with respect to the power drain from the DC source (2).

12. The method as claimed in one of claims 9 to 11, in which the first power (51) is fed into a single-phase energy supply grid for rail transport.

13. The use of a device with a converter (6) and a filter (16) as claimed in one of claims 1 to 5 for feeding AC power into a single-phase energy supply grid for rail transport.

## Revendications

1. Dispositif comprenant un convertisseur (6) et un filtre (16), le convertisseur (6) ayant une entrée (61, 62) connectable à une source de courant continu (2) et au moins un module de conversion (1, 1 '-1 "') ayant une première branche de sortie (1), deuxième et troisième branches de pont (11, 12, 13) et un circuit intermédiaire de tension continue commun (14) pour les branches de pont (11, 12, 13), chacune des branches de pont (11, 12, 13) présentant respectivement une sortie de phase (113, 123, 133), où
les première et deuxième branches de pont (11, 12) sont adaptées pour fournir une première puissance (51) sous forme de courant alternatif aux sorties de phase (113, 123),
**caractérisé en ce que**
un accumulateur d'énergie (42) peut être raccordé à la sortie de phase (133) de la troisième branche de pont (13), le filtre (16) étant monté entre l'accumulateur d'énergie (42) et la sortie de phase (133), et des composants du filtre (16) étant reliés aux commutateurs à semi-conducteurs (311, 312) de la troisième branche de pont (13) en tant que convertisseur DC/DC avec une fonction d'élévation et/ou d'abaissement, et dans lequel la troisième branche de pont (13) est agencée pour échanger une deuxième puissance (52) entre la source de courant continu (2) et l'accumulateur d'énergie (42) et entre l'accumulateur d'énergie (42) et le circuit intermédiaire de tension continue (14), et dans lequel le convertisseur (6) comprend une unité de commande (17) agencée pour commander les branches de pont (11, 12, 13) de manière à ce que la somme de la première puissance (51) et de la deuxième puissance (52) corresponde à une valeur de consigne constante (53).

2. Dispositif selon la revendication 1, dans lequel la valeur de consigne constante (53) correspond à un point de puissance maximale (MPP) de la source de courant continu (2).

3. Dispositif selon la revendication 1 ou 2, dans lequel les première, deuxième et troisième branches de pont (11, 12, 13) sont de même type.

4. Dispositif selon l'une des revendications 1 à 3, dans lequel les première, deuxième et troisième branches de pont (11, 12, 13) sont conçues pour un mode de fonctionnement bidirectionnel.

5. Dispositif selon l'une des revendications 1 à 4, dans lequel le convertisseur (6) comprend exactement un module de conversion (1) avec trois branches de pont (11, 12, 13).

6. Dispositif selon l'une des revendications 1 à 4, dont le convertisseur (6) comprend au moins trois modules de conversion (1, 1'-1‴), une tension alternative triphasée étant fournie en sortie et chaque phase de la tension alternative triphasée étant fournie par deux branches de pont (11, 12) de modules de conversion (1, 1'-1‴) différents, les troisièmes branches de pont (13) étant couplées à un accumulateur d'énergie (42).

7. Dispositif selon l'une des revendications 1 à 6, dans lequel le circuit intermédiaire de tension continue (14) comprend des condensateurs à film.

8. Dispositif selon l'une des revendications 1 à 7, dans lequel les branches de pont (11, 12, 13) sont des branches à point neutre pincé (NPC), à point neutre pincé à commutation bipolaire (BSNPC), à point neutre pincé actif (ANPC) ou à condensateur volant (FLC).

9. Procédé de fonctionnement d'un dispositif avec un filtre (16) et un convertisseur (6), comprenant une entrée (3, 4) pouvant être connectée à une source de courant continu (2), et au moins un module convertisseur (1, 1'-1‴) avec une première, une deuxième et une troisième branche de pont (11, 12, 13) et un circuit intermédiaire de tension continue (14) commun pour les branches de pont (11, 12, 13), chacune des branches de pont (11, 12, 13) présentant respectivement une sortie de phase (113, 123, 133), un accumulateur d'énergie (42) étant monté en aval de la troisième branche de pont (13), le convertisseur (6) comprenant en outre une unité de commande (17) pour la commande des branches de pont (11, 12, 13), et dans lequel
la première et la deuxième branche de pont (11, 12) sont commandées de telle sorte qu'une première puissance (51) sous forme de courant alternatif est fournie aux sorties de phase (113, 123),
**caractérisé en ce que**
le filtre (16) est connecté entre l'accumulateur d'énergie (42) et la sortie de phase (133), des composants du filtre (16) coopérant avec les commutateurs à semi-conducteurs (311, 312) de la troisième branche de pont (13) en tant que convertisseurs DC/DC avec une fonction d'élévation et/ou d'abaissement, la troisième branche de pont (13) étant commandée de telle sorte qu'une deuxième puissance (52) est échangée entre la source de courant continu (2) et l'accumulateur d'énergie (42) et entre l'accumulateur d'énergie (42) et le circuit intermédiaire de tension continue (14), où
la somme de la première puissance (51) et de la deuxième puissance (52) correspond à une valeur de consigne constante (53).

10. Procédé selon la revendication 9, dans lequel la valeur de consigne constante (53) correspond à un point de puissance maximale (MPP) de la source de courant continu (2).

11. Procédé selon la revendication 9 ou 10, dans lequel la deuxième puissance (52) circulant dans ou hors de l'accumulateur d'énergie (42) et la première puissance (51) délivrée en tant que puissance de tension alternative évoluent en opposition de phase par rapport au prélèvement de puissance de la source de courant continu (2).

12. Procédé selon l'une des revendications 9 à 11, dans lequel la première puissance (51) est injectée dans un réseau d'alimentation électrique monophasé pour un trafic ferroviaire.

13. Utilisation d'un dispositif comprenant un convertisseur (6) et un filtre (16) selon l'une des revendications 1 à 5 pour l'injection de puissance alternative dans un réseau d'alimentation électrique monophasé pour un trafic ferroviaire.
